# EUROPÄISCHE PATENTSCHRIFT

(11) **EP 0 815 167 B1**
(45) Veröffentlichungstag und Bekanntmachung des Hinweises auf die Patenterteilung: **15.01.2003**
(21) Anmeldenummer: 96907385.7
(22) Anmeldetag: 08.03.1996
(51) Int. Cl.: C08K 5/10, C09D 157/00, C09J 157/00, C08J 3/18, B60R 13/08

(54) **PLASTISOL-ZUSAMMENSETZUNG**
PLASTISOL COMPOSITION
COMPOSITION DE PLASTISOL

(30) Priorität: 16.03.1995 DE 19509085
(43) Veröffentlichungstag der Anmeldung: 07.01.1998
(73) Patentinhaber: Henkel Teroson GmbH, 69046 Heidelberg (DE)
(72) Erfinder: WESCH, Karl, D-69429 Waldbrunn (DE)
(74) Vertreter: Mathes, Nikolaus, Dr.
(86) Internationale Anmeldenummer: EP9600986
(87) Internationale Veröffentlichungsnummer: WO96028505

(56) Entgegenhaltungen:
- AU-A- 3 725 068
- CH-A- 223 079
- DE-A- 1 910 911
- DE-A- 19 531 849
- J OIL COL CHEM ASSOC, Bd. 57, 1974, LONDON, Seiten 161-169, XP000571805 KHANNA: "flow and ageing of pvc pastes"

## Beschreibung

Die Erfindung betrifft Plastisol-Zusammensetzungen, die C₁-Monoalkylester von Fettsäuren mit mindestens 12 Kohlenstoffatomen enthalten, ein Verfahren zu ihrer Herstellung und ihre Verwendung.

Unter Plastisolen werden allgemein Dispersionen von organischen Kunststoffen in Weichmachern verstanden, welche beim Erwärmen auf höhere Temperatur gelieren und beim Abkühlen zum Plastigel aushärten. Die in der Praxis heute am weitesten verbreiteten Plastisole enthalten ganz überwiegend feinpulvriges Polyvinylchlorid, Copolymere des Vinylchlorids, in neuerer Zeit auch Methacrylatcopolymere oder Styrolcopolymere. Diese feinpulvrigen Polymeren sind in einem flüssigen Weichmacher dispergiert und bilden das pastenförmige Plastisol. Derartige Plastisole finden für die verschiedensten Zwecke Anwendung. Sie werden zum Beispiel eingesetzt als Dichtungsmassen, zum Imprägnieren und Beschichten von Substraten aus textilen Materialien, als Kabelisolierungen sowie als Klebstoff. In der Automobilindustrie werden Plastisole zum Unterbodenschutz, zur Nahtabdichtung und- versiegelung, zur Haubenunterfütterung, als Antidröhnmasse oder als Klebstoff verwendet. Je nach Anwendungszweck enthalten diese Plastisole neben den feinteiligen Polymerpulvern und den flüssigen Weichmachern weitere Zuschlagsstoffe. Derartige Zuschlagsstoffe sind z. B. Füllstoffe, Haftvermittler, Stabilisatoren, Rheologie-Hilfsmittel, wasserabsorbierende Substanzen, Pigmente oder Blähmittel.

Die in der Plastisol-Technologie eingesetzten bzw. einsetzbaren Weichmacher können nach den verschiedensten Gesichtspunkten eingeteilt werden, die übersichtlichste Einteilung richtet sich nach den chemischen Produktklassen der Weichmacher, wie Phthalate, Epoxide, aliphatische Dicarbonsäureester, Phosphate, Polyester, Spezialweichmacher, Extender (Kohlenwasserstoffe, chlorierte Kohlenwasserstoffe). Bei den meisten industriell eingesetzten Weichmachern handelt es sich um chemisch stabile Di- und Tri-Ester von aromatischen oder aliphatischen Di- und Tricarbonsäuren, in seltenen Fällen werden auch nicht-Esterartige Verbindungen mit weichmachender Wirkung eingesetzt. Insbesondere bei den PVC-Homo- bzw. Copolymeren werden ganz überwiegend die Phthalsäurediester am meisten verwendet, da diese bisher kostengünstig in großer Menge verfügbar waren. Laut H.K. Felger (Herausgeber), Kunststoffhandbuch "Polyvinylchlorid", Bd. 2/1, 2. Aufl. 1985, Kapitel 6.7, haben die besonders preisgünstigen Dioctylphthalate (Di-2-ethylhexylphthalat bzw. Diisooctylphthalat) bisher einen dominant hohen Marktanteil gehabt. Da diese jedoch möglicherweise gesundheitsgefährdend sind, werden allseits erhebliche Anstrengungen unternommen, diese durch andere Weichmacher zu ersetzen. Weitere gängige Phthalat-Weichmacher sind die verschiedenen isomeren Diisononylphthalate, Diisodecylphthalate und Diundecylphthalate. Weiterhin werden noch häufig die Phthalsäureester von C₈-/C₁₀-Alkoholen bzw. C₇-/C₁₁-Alkoholen eingesetzt. Diese Weichmacher sind jedoch, insbesondere in der letzten Zeit, erheblich teurer als die Dioctylphthalate. Die aliphatischen Dicarbonsäureester, insbesondere die Diadipate, Diazelate, Disebazate, haben zwar besonders hervorragende Tieftemperatur-Eigenschaften, wegen ihres hohen Preises werden diese jedoch nur in speziellen Fällen eingesetzt. Das gleiche gilt für die Phosphat-Weichmacher sowie für die Polyester-Weichmacher als auch für die sonstigen Spezial-Weichmacher, wie z.B. Ester der Terephthalsäure, der Trimellithsäure, der Pyromellithsäure, der Zitronensäure, oder die Alkylsulfonsäureester des Phenols und Kresols.

Die bisher bekannten Extender oder Sekundär-Weichmacher, im wesentlichen Kohlenwasserstoffe, werden zur Kostensenkung nur in Mischung mit Primärweichmachern verwendet. Wegen ihrer hohen Flüchtigkeit und ihres negativen Einflusses auf die Verträglichkeit können die bisher bekannten Extenderweichmacher jedoch nur im sehr begrenztem Umfang eingesetzt werden, sie dienen fast ausschließlich zur Reduzierung der Viskosität der Plastisolpasten, um ihre Spritzbarkeit insbesondere nach dem airless-Verfahren zu gewährleisten.

Es bestand daher die Aufgabe, Stoffe zu finden, die sich zumindest als Sekundär-Weichmacher eignen, die gesundheitlich unbedenklich sind und wirtschaftlich in ausreichenden Mengen zur Verfügung stehen. Vorzugsweise sollten diese Stoffe auf der Basis von nachwachsenden Rohstoffen sein.

Es wurde jetzt überraschend gefunden, daß C₁-Monoalkylester von Monocarbonsäuren mit mindestens 12 Kohlenstoffstomen in PVC-Plastisolen die bisher eingesetzten Phthalsäure-Ester zu bis zu 50% ersetzen können, ohne daß Haftung, Lagerstabilität, Zugfestigkeit, Dehnung oder Schwitzwasserbeständigkeit negativ beeinflußt werden. Dies ist um so überraschender, als nach gängiger Lehrmeinung die Ester der Monocarbonsäuren zu flüchtig, wasserempfindlich und zu wenig gelierfähig sein sollen, um als Weichmacher verwendbar zu sein. Im Kunststoffhandbuch Bd. 2/1 wird auf S. 631 zu diesem Thema z.B. aufgeführt, daß es bei den längerkettigen Estern von Fettsäuren auch zu Verträglichkeitsproblemen kommt, so daß diese nicht zu Weichmachern von PVC gezählt werden können. Eine gewisse Bedeutung haben sie als Tieftemperatur-, Sekundärweichmacher und als Gleitmittel bei der PVC-Hart- und Weichverarbeitung. Insbesondere bei der Verwendung als Gleitmittel werden sie jedoch nur in Kleinstmengen den PVC-Mischungen zugesetzt, dort ist sogar eine Unverträglichkeit mit dem Polymerverbund erwünscht, da diese Gleitmittel bekanntermaßen an die Phasengrenzfläche auswandern sollen, um eine antiadhäsive Wirkung beim Extrusions- und weiteren Verarbeitungsprozeß zu bewirken. Über die Verwendung der Monoester von Monocarbonsäuren von Fettsäuren mit mindestens 12 Kohlenstoffatomen in PVC-Plastisolen, insbesondere solchen, die gute Haftwirkung auf beschichteten und unbeschichteten Blechen haben sollen, werden im Kunststoffhandbuch keinerlei Angaben gemacht.

Als erfindungsgemäß einzusetzende Sekundär-Weichmacher eignen sich grundsätzlich C₁-Alkylester von Monocarbonsäuren mit mindestens 12 Kohlenstoffatomen. Da die Fettsäuren für die Monoester vorzugsweise aus natürlichen Quellen stammen, handelt es sich hierbei in der Regel um Mischungen von gesättigten und überwiegend ungesättigten Fettsäuren mit unterschiedlicher Kettenlänge. Ganz besonders bevorzugt werden Methylester der Tallöl-Fettsäuren, Rapsöl-Fettsäuren, Leinöl-Fettsäuren und/oder Safflower-Öl-Fettsäuren.

Als Primär-Weichmacher können in den erfindungsgemäßen Plastisolen grundsätzlich alle gängigen Weichmacher Verwendung finden, beispielhaft genannt seien die C₆-C₁₄-Dialkylester der Phthalsäure, Alkyl-Benzylester der Phthalsäure, Benzoate von di- oder trifunktionellen Polyolen wie z.B. das Dipropylenglykoldibenzoat, Alkylsulfonsäureester des Phenols und Kresols, Arylphosphate, Alkylphosphate, C₆-C₁₄-Diester von aliphatischen C₄-C₁₀-Dicarbonsäuren und/oder Polymerweichmachern auf der Basis von Diolen und Dicarbonsäuren sowie deren Mischungen. Dabei beträgt das Verhältnis des Sekundärweichmachers zum Primärweichmacher 0,02 : 1 bis 2 : 1, vorzugsweise 0,07 : 1 - 0,06 : 1. Wegen der möglicherweise gesundheitsgefährdenden Wirkung enthalten die erfindungsgemäßen Plastisole jedoch vorzugsweise kein Dioctylphthalat oder Dibutylphthalat.

Die übrigen Bestandteile der erfindungsgemäßen Plastisole sind an sich bekannt. So werden als feinteilige Polymerpulver vorzugsweise Polyvinylchlorid-Homopolymere und/oder Vinylchlorid-Vinylacetat-Copolymere mit einem Vinylacetatanteil von bis zu 20 Gew.% bezogen auf das Copolymer verwendet. Diese PVC-Pulver werden dabei üblicherweise nach dem Emulsionspolymerisations- bzw. Mikrosuspensionspolymerisation als sogenannte Pastentypen hergestellt. Zusätzlich oder an Stelle von diesen Pastentypen können Suspensionspolymere eingesetzt werden, die auch als Extenderpolymere bezeichnet werden.

Auch Methacrylat-Copolymere, wie sie durch die DE-B-2454235 und DE-B-2529732 bekannt geworden sind sowie die aus der DE-A-4034725 und der DE-A-4315191 bekannten Styrolcopolymere lassen sich für die erfindungsgemäßen Plastisole verwenden.

Außerdem können die erfindungsgemäßen Plastisole die in der Plastisol-Technologie bekannten Hilfs- und Zusatzstoffe enthalten. Hierzu zählen beispielsweise die Epoxidweichmacher, vorzugsweise epoxidierte natürliche Öle wie das epoxidierte Sojabohnenöl, epoxidierte Leinöl oder epoxidierte Tallöle. Diese Epoxidweichmacher werden bekanntermaßen in geringen Mengen insbesondere in PVC-Plastisolen als Hitzestabilisatoren verwendet.

Als Füllstoff können alle in der Plastisol-Technologie gängigen und an sich bekannten Füllstoffe verwendet werden. Beispiele für geeignete Füllstoffe sind Kalksteinmehl, natürliche, gemahlene Kreiden (Calciumcarbonate oder Calcium-Magnesium-Carbonate), gefällte Kreiden, Schwerspat, Talk, Glimmer, Tone, Pigmente wie z.B. Titandioxid, Ruß, Eisenoxide. Die Plastisole können weiterhin die üblichen Alterungsschutzmittel und Stabilisatoren, Rheologie-Hilfsmittel wie z.B. pyrogene Kieselsäuren, Bentone, Rizinusöl-Derivate enthalten. Zur Herstellung von spezifisch leichten Plastisolen können außerdem sogenannte Mikrohohlkugeln eingesetzt werden. Außerdem können den Plastisolen ggf. Treibmittel zugesetzt werden, wenn die Plastisole während des Gelierprozesses aufgeschäumt werden sollen. Als Treibmittel geeignet sind alle an sich bekannten Treibmittel, vorzugsweise organische Treibmittel aus der Klasse der Azoverbindungen, N-Nitrosoverbindungen, Sulfonylhydrazide oder Sulfonylsemicarbazide. Aus der

Klasse der Azoverbindungen seien beispielhaft das Azobisisobutyronitril und insbesondere das Azodicarbonamid genannt, aus der Klasse der Nitrosoverbindungen sei beispielhaft das Di-Nitrosopentamethylentetramin genannt, aus der Klasse der Sulfohydrazide das 4,4'-Oxybis(benzolsulfonsäurehydrazid) und aus der Klasse der Semicarbazide das p-Toluolsulfonylsemicarbazid genannt.

Aufgeschäumte Plastisole können auch durch den Einsatz von thermoplastischen "Microspheres" erhalten werden. Diese enthalten ein flüssiges Treibmittel auf der Basis von aliphatischen Kohlenwasserstoffen oder Fluorkohlenwasserstoffen als Kern und eine Schale aus einem Copolymer aus Acrylnitril mit Vinylidenchlorid und/oder Methylmethacrylat und/oder Methacrylnitril. Beim Einsatz derartiger Microspheres erfolgt die Expansion der Microspheres und damit das Schäumen erst während des Gelierprozesses des Plastisols. Die Verwendung derartiger Microspheres ist beispielsweise in der EP-A-559254 beschrieben.

Bei vielen Anwendungen ist der Zusatz von Haftvermittlern erforderlich. Als Haftvermittler können dabei die verschiedenen Polyaminoamide auf der Basis von polymerisierten oder dimerisierten Fettsäuren, Epoxidharze, ggf. in Kombination mit heißhärtenden Vernetzern (z.B. Dicyandiamid), Phenolharze, Terpenphenolharze sowie (blockierte) Di-bzw. Polyisocyanate verwendet werden. Bevorzugt werden die Polyaminoamide auf der Basis von Polyaminen und dimerisierten bzw polymerisierten Fettsäuren eingesetzt. Die Haftvermittler werden üblicherweise in Mengen zwischen 0,01 und 5 Gew.%, bezogen auf die gesamte Plastisolformulierung, verwendet.

Die Plastisolzusammensetzungen bestehen somit üblicherweise aus
- a) 5 bis 50 Gew.% mindestens eines pulverförmigen Polymers,
- b) 5 bis 65 Gew.% Weichmachermischung aus Primärweichmacher und Sekundärweichmacher, wobei das Verhältnis des Sekundärweichmachers zum Primärweichmacher 0,02 : 1 bis 2 : 1, vorzugsweise 0,07 : 1 bis 0,6 : 1 beträgt,
- c) 0 bis 50 Gew.% Füllstoffe,
- d) 0,01 bis 5 Gew.% eines Haftvermittlers,
- e) ggf. weitere reaktive Zusätze sowie weitere Hilfs- und Zusatzstoffe,
wobei die Summe der Einzelkomponenten 100 Gew.% beträgt.

Die erfindungsgemäßen Plastisole eignen sich besonders gut zur Verwendung auf metallischen Substraten in lackierter bzw. unlackierter Form, insbesondere im Automobilbau. Im Automobilbau finden die erfindungsgemäßen Plastisole Einsatz als Unterbodenschutz, als Klebstoffe für die Haubenunterfütterung, als Massen zm Schwellerschutz, als Punktschweißpaste sowie für andere Klebstoffanwendungen. Außerdem können sie zur Abdichtung und Versiegelung von Schweiß- bzw. Bördelnähten verwendet werden sowie als akustisch wirksame Beschichtungen ("Antidröhnmassen").

Zur näheren Erläuterung der Erfindung sollen die nachfolgenden Beispiele dienen. Diese Beispiele sollen den Einfluß der einzelnen Parameter auf die vorliegende Erfindung verdeutlichen, sie stellen jedoch keine Eingrenzung des Erfindungsgedankens dar.

Die in den nachfolgenden Beispielen genannten Mengenangaben sind Gewichtsteile, wenn nicht ausdrücklich anders angegeben.

### Beispiele 1 bis 4, Vergleichsbeispiel

Bei den nachfolgend aufgeführten Plastisolzusammensetzungen wurden die Einzelkomponenten in einem Planetenmischer unter Vakuum und hoher Scherung gerührt, bis die Zusammensetzung homogen war.

**Tabelle 1**

| Beispiel | 1 | 2 | 3 | 4 | Vergleich |
|---|---|---|---|---|---|
| PVC-Homopolymer¹⁾ | 17,0 | 17,0 | 17,0 | 17,0 | 17,0 |
| PVC-Homopolymer²⁾ | 4,0 | 4,0 | 4,0 | 4,0 | 4,0 |
| Diisononylphthalat | 37 | 34 | 30 | 25 | 40,0 |
| Benzin 190/250 | 3 | 3 | 3 | 3 | 5,0 |
| Rapsölmethylester³⁾ | 3 | 6 | 10 | 15 | -- |
| Kreide, gemahlen⁴⁾ | 12,37 | 12,37 | 12,37 | 12,37 | 12,37 |
| Calciumoxid | 1,5 | 1,5 | 1,5 | 1,5 | 1,5 |
| Zinkoxid | 0,2 | 0,2 | 0,2 | 0,2 | 0,2 |
| Rußpaste | 0,03 | 0,03 | 0,03 | 0,03 | 0,03 |
| Kreide gefällt⁵⁾ | 13,6 | 13,6 | 13,6 | 13,6 | 13,6 |
| Kreide gefällt⁶⁾ | 5,0 | 5,0 | 5,0 | 5,0 | 5,0 |
| Kieselsäure, hochdispers | 0,5 | 0,5 | 0,5 | 0,5 | 0,5 |
| Polyaminoamid⁷⁾ | 0,8 | 0,8 | 0,8 | 0,8 | 0,8 |
| Viskosität [Pa.s]⁸⁾ | 1,38 | 0,97 | 0,83 | 0,65 | 1,30 |
| Fließgrenze [Pa.s]⁸⁾ | 210 | 172 | 153 | 142 | 175 |
| Shore Härte A | 44 | 43 | 44 | 45 | 44 |
| Haftung | s.gut | s.gut | s.gut | s.gut | s.gut |
| Ausschwitzen | nein | nein | nein | nein | nein |
| Zugfestigkeit[N/mm²] | 1,87 | 1,99 | 1,96 | 2,0 | 2,04 |
| Bruchdehnung [%] | 195 | 190 | 176 | 162 | 190 |

| | | | | | |
|---|---|---|---|---|---|
| Anmerkungen: 1) Emulsionspolymer, Pastentyp, K-Wert 72 | | | | | |
| 2) Suspensionspolymer, K-Wert 65 | | | | | |
| 3) Synonym: Rüböl-Fettsäuremethylester, hergestellt durch Umesterung des Rapsöls, Säurezahl 1, Verseifungszahl ca. 190, Jodzahl ca. 110 | | | | | |
| 4) natürliche gemahlene Kreide, mittlere Teilchengröße 2µ | | | | | |
| 5) gefällte, stearatgecoatete Kreide, mittlere Teilchengröße 2,5µ | | | | | |
| 6) gefällte Kreide, mittlere Teilchengröße 2,0µ | | | | | |
| 7) Basis: Dimerfettsäure, Diethylentriamin, Aminzahl etwa 240 | | | | | |
| 8) Rheomat 115, Meßssystem 114. | | | | | |

Zur Beurteilung der gelierten Plastisole wurden die oben aufgeführten Zusammensetzungen 30 Minuten bei 165° geliert.

Zur Prüfung der Haftung wurden Raupen auf kataphoretisch beschichtete Bleche aufgebracht und den oben genannten Einbrennbedingungen unterworfen, danach erfolgte die Haftungsprüfung durch manuellen Schälversuch. Die gelierten Proben wurden nach einwöchiger Lagerung bei Raumtemperatur darauf überprüft, ob flüssige Bestandteile an die Oberfläche des Plastigels ausgeschwitzt waren. Die Zugfestigkeit und Bruchdehnung wurde in Anlehnung an die DIN 53504 an gelierten Plastigel-Streifen mit den Abmessungen 10x1x100 mm bei einer Reißgeschwindigkeit von 100mm/min durchgeführt.

Wie aus den obigen Versuchen ersichtlich, sind selbst bei hohen Anteilen von Rapsölmethylester in den Formulierungen (Beispiel 4) die Gebrauchseigenschaften des Plastigels dem Plastigel des Standes der Technik, das keinen Rapsölmethylester enthält, ebenbürtig.

### Beispiele 5 bis 8

Bei den in der Tabelle 2 aufgeführten Beispielen wurde an einer vereinfachten Formulierung überprüft, ob auch weitere gemäß Stand der Technik gebräuchliche Weichmacher in Plastisolen teilweise durch Rapsölmethylester substituiert werden können.

**Tabelle 2**

| Beispiel | 5 | 6 | 7 | 8 |
|---|---|---|---|---|
| PVC-Homopolymer, Pastentyp | 30 | 30 | 30 | 30 |
| Kreide, gemahlen | 40 | 40 | 40 | 40 |
| Polyaminoamid | 1 | 1 | 1 | 1 |
| Rapsölmethylester | 20 | 20 | 20 | 20 |
| Diisodecylphthalat | 10 | - | - | - |
| Diisobutylphthalat | - | 10 | - | - |
| Alkylsulfonsäureester d.Phenols | - | - | 10 | - |
| Polymerweichmacher auf Basis Phthalsäure, Diethylenglykol und C₇/C₁₁-Alkohol | - | - | - | 10 |
| Shore Härte "A" | 71 | 66 | 67 | 67 |

Um die Gelierfähigkeit dieser Plastisole besonders kritisch überprüfen zu können, wurde bei verkürzter Einbrennzeit (17min/165°C) geliert. Alle Plastisol-Zusammensetzungen waren vollständig geliert und zeigten keinerlei Ausschwitzen von flüssigen Bestandteilen aus dem Plastigel nach mehrtägiger Raumtemperatur-Lagerung.

## Patentansprüche

1. Plastisole auf Basis von Vinylchlorid-Homo- und/oder Copolymeren, Methylmethacrylat-Copolymeren und/oder Styrol-Copolymeren und Weichmachern, **dadurch gekennzeichnet, daß** sie C1- Monoalkylester von Fettsäuren mit mindestens 12 C-Atomen enthalten.

2. Plastisole nach mindestens einem der vorhergehenden Ansprüche, **dadurch gekennzeichnet, daß** als Monoester die Methylester der Tallöl-Fett-säuren, Rapsöl-Fettsäuren, Leinöl-Fettsäuren und/oder Saffloweröl-Fettsäuren verwendet werden.

3. Verwendung von Monoestern von Fettsäuren als Sekundärweichmacher in Plastisolen nach mindestens einem der vorhergehenden Ansprüche.

4. Verwendung nach Anspruch 3, **dadurch gekennzeichnet, daß** als Primär-Weichmacher C₆ bis C₁₄-Di-Alkylester der Phthalsäure, Alkyl-Benzylester der Phthalsäure,Benzoate von dioder trifunktionellen Polyolen, Alkylsulfonsäureester des Phenols, Arylphosphate, Alkylarylphosphate, C₆ bis C₁₄-Diester von aliphatischen C₄ bis C₁₀-Dicarbonsäuren und/oder Polymerweichmacher auf der Basis von Diolen und Dicarbonsäuren und deren Mischungen verwendet werden, wobei das Verhältnis des Sekundärweichmachers zum Primär-Weichmacher 0.02 : 1 bis 2 : 1, Vorzugsweise 0.07 : 1 bis 0.6 : 1 beträgt.

5. Plastisole nach mindestens einem der vorhergehenden Ansprüche, **dadurch gekennzeichnet, daß** sie zusätzlich übliche Zusatz- und Hilfsstoffe, wie Füllstoffe, Rheologiehilfsmittel, Stabilisatoren, Haftvermittler, pigmente und/oder Treibmittel enthalten.

6. Herstellung von Plastisolen nach mindestens einem der vorhergehenden Ansprüche durch Dispergieren der festen Bestandteile in den flüssigen Bestandteilen unter hoher Scherung und ggf. Vakuum.

7. Verwendung von Plastisolen nach mindestens einem der vorhergehenden Ansprüche als Unterbodenschutz, Klebstoff, Nahtabdichtung, Unterfütterungsklebstoff oder Antidröhnmasse im Automobil- oder Fahrzeugbau.

## Claims

1. Plastisols based on vinyl chloride homopolymers and/or copolymers, methyl methacrylate copolymers and/or styrene copolymers and plasticizers, **characterized in that** they contain C₁- monoesters of fatty acids containing at least 12 carbon atoms.

2. Plastisols as claimed in at least one of the preceding claims, **characterized in that** the methyl esters of tall oil fatty acids, rapeseed oil fatty acids, linseed oil fatty acids and/or safflower oil fatty acids are used as the monoesters.

3. The use of monoesters of fatty acids as secondary plasticizers in plastisols according to at least one of the preceding claims.

4. The use claimed in claim 3, **characterized in that** C₆- C₁₄ dialkyl esters of phthalic acid, alkyl benzyl esters of phthalic acid, benzoates of difunctional or trifunctional polyols, alkyl sulfonic acid esters of phenol, aryl phosphates, alkylaryl phosphates, C₆-C₁₄ diesters of aliphatic C₄-C₁₀ dicarboxylic acids and/or polymer plasticizers based on diols and dicarboxylic acids and mixtures thereof are used as the primary plasticizers, the ratio of secondary plasticizer to primary plasticizer being from 0,02:1 to 2:1 and preferably from 0,07:1 to 0,6:1.

5. Plastisols as claimed in at least one of the preceding claims, **characterized in that** they additionally contain typical auxiliaries and additives, such as fillers, rheology aids, stabilizers, coupling agents, pigments and/or blowing agents.

6. A process for the production of the plastisols claimed in at least one of the preceding claims by dispersion of the solid constituents in the liquid constituents with intensive shearing and optionally in vacuo.

7. The use of the plastisols according to at least one of the preceding claims as underbody protection, as an adhesive, for seam sealing, as a lining adhesive or antivibration compound in automobile and vehicle construction.

## Revendications

1. Plastisols à base d'homo- et/ou de copolymères de chlorure de vinyle, de copolymères de méthylméthacrylate et/ou de copolymères de styrène, et de plastifiants, **caractérisés en ce qu'ils** contiennent des esters monoalkyliques en C₁ d'acides gras comportant au moins 12 atomes de C.

2. Plastisols selon au moins une des revendications qui précédent, **caractérisés en ce que** l'on utilise comme monoesters les esters méthyliques des acides gras du tallol, des acides gras de l'huile de colza, des acides gras de l'huile de lin et/ou des acides gras de l'huile de carthame.

3. Utilisation de monoesters d'acides gras comme plastifiant secondaire dans des plastisols selon au moins une des revendications qui précèdent.

4. Utilisation selon la revendication 3, **caractérisée en ce que** l'on utilise comme plastifiant primaire, des esters dialkyliques en C₆ à C₁₄ de l'acide phtalique, des esters alkylbenzyliques de l'acide phtalique, des benzoates de polyols di- ou trifonctionnels, des esters d'acide alkylsulfonique du phénol, des arylphosphates, des alkylarylphosphates, des diesters en C₆ à C₁₄ d'acides dicarboxyliques aliphatiques en C₄ à C₁₀ et/ou des plastifiants pour polymères à base de diols et d'acides dicarboxyliques et des mélanges de ceux-ci, le plastifiant secondaire et le plastifiant primaire étant entre eux dans un rapport de 0,02:1 à 2:1, de préférence de 0,07:1 à 0,6:1.

5. Plastisols selon au moins une des revendications qui précédent, **caractérisés en ce qu'ils** contiennent en plus des additifs et des adjuvants usuels tels que des charges, des adjuvants de rhéologie, des stabilisants, des agents adhésifs, des pigments et/ou des agents porophores.

6. Production des plastisols selon au moins une des revendications qui précèdent, par dispersion des constituants solides dans les constituants liquides, sous un cisaillement élevé et éventuellement sous vide.

7. Utilisation des plastisols selon au moins une des revendications qui précèdent, comme protection du bas de caisse, adhésif, étanchement des soudures, adhésif pour garnissage ou matière d'insonorisation dans la construction d'automobiles ou de véhicules.
